# EUROPEAN PATENT APPLICATION

(11) **EP 1 158 206 A2**
(43) Date of publication of application: **28.11.2001**
(21) Application number: 01111747.0
(22) Date of filing: 15.05.2001
(51) Int. Cl.: F16H 9/12

(54) **Motor-converter with plate-type friction clutch**

(30) Priority: 23.05.2000 IT RE000019 U; 06.03.2001 IT RE010008 U
(71) Applicant: STILFRENI S.r.l., 42030 Viano (Reggio Emilia) (IT); CORAM S.p.A., 25033 Cologne (Brescia) (IT)
(72) Inventor: Piantoni, Angelo, 25033 Cologne (Brescia) (IT)
(74) Representative: Lecce, Giovanni

(57) **Abstract**

A motor-converter with plate-type friction clutch comprising:
- a motor-shaft (1);
- at least a trapezoid-race-variable-diameter motive pulley (25);
- a chill (7), mounted on said motor-shaft (1) in coaxial alignment with at least one of said half-pulleys (21), and having a curved surface wall (20');
- a lid (4), having a supporting housing (4'), fastened to said chill;
- an elongated guide (2) of said motor-shaft (1) inserted in and supported by said housing (4');
- a dragging bell (5) integral with the motor-shaft;
- masses (19) caused to move by said bell (5) and radially sliding in the centrifugal direction along the curved surface wall of chill (7); and
- at least a-trapezoid-race-variable-diameter driven pulley (26), said dragging bell (5) and chill (7) being made by light materials with high mechanical characteristics.

## Description

The present invention relates to a motor-converter with plate-type friction clutch.

More particularly, the present invention relates to a continuous motor-converter with plate-type friction clutch of the type comprising two pulleys, one of them being a motive pulley, and the other one a driven pulley, constituted each of two combined and opposed parts having a variable transmission diameter, coupled through a trapezoid belt.

Such type of continuous motor-converter is particularly suitable to be used for small city cars, cars intended for the handicapped, motor-saddles, motor-scooters and the like.

As is known, gear-motors are devices that allow to change the motion transmission ratio value according to the acceleration and, therefore, the number of rotations of the motor-shaft. They comprise at least a motive pulley having a trapezoid race with a variable diameter for two corresponding belts, formed by two trapezoid half-pulleys, opposite, idly-mounted on a co-axial motor-shaft. In coaxial alignment with at least one of said half-pulleys, a chill is mounted that comprises, on the parallel side facing said semi-pulley, a plate-type friction clutch, and, on the opposite side, a wall having a curved surface. Along said walls there are radially sliding, in the centrifugal direction, masses caused to move by an end bell integral with the transmission shaft.

The centrifugal action of the masses causes an axial shifting of the chill which, as a consequence, engages said half-pulley through its plate-type friction clutch. Adjustable elastic means ensure the axial thrust for the realization of said engagement relation. The rotation and axial sliding of said first half-pulley friction drags also the second half-pulley by means of a trapezoid belt. According to the acceleration and therefore the increase in the rotation number of the motor-shaft and the angle speed, the centrifugal force of the masses that move increasingly radially towards the outside increases, causing the maximum radial shift of the chill and the plate-type friction clutch of the coupled half-pulley, with a corresponding "climbing" or shifting towards the periphery of the trapezoid belt along the race formed by the coupling of the opposite half-pulleys. Such climbing or shifting causes a variation in the dragging diameter and, therefore, a continuous variation in the transmission ratio of the motor-converter.

Through the trapezoid belt, the transmission is sent to the trapezoid-race-variable-diameter driven pulley, also formed by two opposite half-pulleys. The known plate-type friction clutch motor-converters, while being commonly used with satisfactory results from the functional point of view, have some drawbacks that cause the motion transmission to be imperfect and/or require continuous maintenance interventions for the adjustment and or replacement of the parts.

One of these drawbacks is due to the fact that the chill with the plate-type friction clutch that engages with the idly half-pulley, the dragging bell and the related centrifugal expansion masses are cantilever-mounted on the motor-shaft and rest on the end of said shaft. They cause a flexion of said end which causes the drag thrusting on said half-pulley to be irregular and non orthogonal.

This involves an imperfect transmission of the motion and an irregular consumption of both the plate-type friction clutch and the trapezoid transmission belt.

Another drawback lies in that the known motor-converters are devoid of any axial adjustment means able to correctly make up for the clearance between the parts that ensues from the natural wear of the friction clutch material. As wear increases, the axial thrust of the counteracting elastic gears that are calibrated with optimum mean loads decreases. This involves the necessity of replacing the plate-type friction clutch after a specific number of working hours; when, i.e., the axial thrust of the elastic gears is lower than the minimum value necessary for the dragging, even if the residual thickness of the clutches might be still advantageously exploited.

A further drawback lies in that the present motor-converters do not comprise protection means adequate to prevent the formation in their inside of deposits of powders harmful for the correct working nor quick means for an easy disassembly for the overhaul and maintenance. The recovery of the clearance ensuing from the progressive wear of the friction clutch takes place through the periodic elimination of thickness, which is a long and laborious operation that requires the disassembly of the whole dragging unit.

Besides, the motor-shaft and the dragging bell are coupled through means that can produce an imperfect co-axiality and orthogonality of the inclined plane of the bell, with an ensuing irregular motion transmission.

Object of the present invention is to obviate the aforesaid drawbacks.

This and other objects that will be obvious thanks to the following description are achieved by means of a motor-converter comprising:
- a motor-shaft;
- at least a trapezoid-race-variable-diameter motive pulley, formed by two trapezoid, opposite half-pulleys, idly-mounted on said motor-shaft;
- a chill, mounted on said motor-shaft in coaxial alignment with at least one of said half-pulleys, and comprising on the parallel side facing said half-pulley, a plate-type friction clutch and, on the opposite side, a curved surface wall;
- a dragging bell integral with the motor-shaft;
- masses caused to move by said bell and radially sliding in the centrifugal direction along the curved surface wall of the chill; and
- at least a trapezoid-race-variable-diameter driven pulley formed by two trapezoid opposite half-pulleys, and connected to said motive pulley through a trapezoid belt, wherein
the chill comprises a lid having a supporting housing; the motor-shaft comprises an elongated guide whose end is inserted in and supported by said housing, and the dragging bell and the complementary chill are made from light materials having high mechanical characteristics.

The motor-shaft may be connected to various kinds of motors by means of interchangeable adjustment flanges fixed onto the motor-shaft by means of a threading with an anti-unscrewing coil contrary to the rotation direction of the motor.

The wear clearance of the friction clutch can be recovered by placing between the motor-shaft and the dragging bell either several shims or concentric continuous axial sliding means with the related locking means.

The dragging bell may be coupled to the motor axle or the chill by means of a coaxial joint and peripheral sliding blocks.

Besides, for the protection against powder deposits, all the internal parts of the motor-converter of the present invention are provided with annular protection gaskets, and a shunting ring is fixed to the plate-type friction clutch and anchored to the chill.

The dragging masses may be obtained by co-molding of a plastic material resistant to wear and high temperatures, on a metal core. Besides, the motor-converter of the present invention may be provided with a device for the quick extraction of the driven pulley.

Among the many advantages achieved with the motor-converter of the present invention, we mention the following ones.

In the first place, the axial contact thrust of the plate-type friction clutch against the trapezoid half-pulley of variable motion transmission, takes place in a perfectly orthogonal correct manner, with a uniform wear of the plate-type friction clutch. This allows to obtain the maximum exploitation of the thickness of the friction clutch material with the maximum efficiency and less maintenance interventions.

Besides, the use of light and resistant materials for the forming of the bell and the chill, as well as the addition of a further resting point, reduce the load on the terminal part of the motor-shaft and ensure a perfect coaxial and orthogonal alignment of the motor-shaft relatively to the plate-type friction clutch.

The recovery of the wear clearance of the dragging clutch is progressive and can be obtained in an easy and quick manner by means of the axial sliding of the bell, caused by a screwing action and subsequent locking.

The presence of the adjustment flanges on which the motor-shaft ties through an antiscrewing threaded coupling, allows to perform in a simple, quick and precise manner the coupling of the motor-converter of the present invention with any means for which it is intended.

The constructive and functional characteristics of the motor-converter of the present invention will be better understood thanks to the following description,, wherein reference is made to the figures of the attached drawings, reported only by way of illustrative, non limiting example, and wherein:

Figure 1 shows the schematic view of a cross-section of an embodiment of the motor-converter of the present invention;

Figures 2a and 2b show the detail of the extractor of the driven pulley, respectively in the starting position and during the extraction stage;

Figure 3 shows the schematic view of an enlarged cross-section of the coupling and adjustment region of the thrust on the plate-type friction clutch.

Figure 4 shows the schematic view of an enlarged cross-section of a second embodiment of the coupling and adjustment zone of the thrust of the friction clutch plate, and

Figure 5 shows the schematic view of a cross-section of a third embodiment of the motor-converter of the present invention.

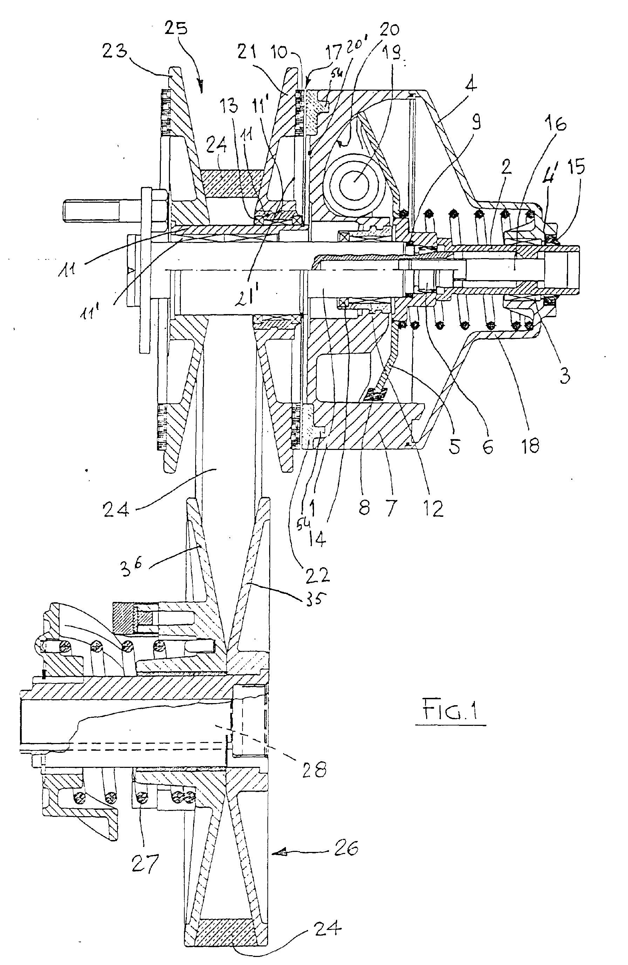

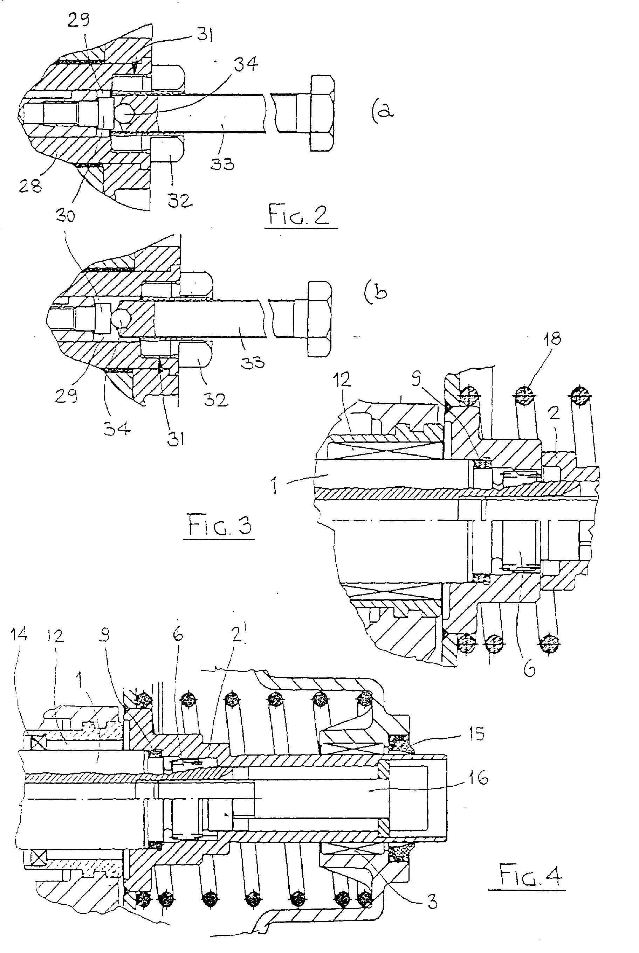

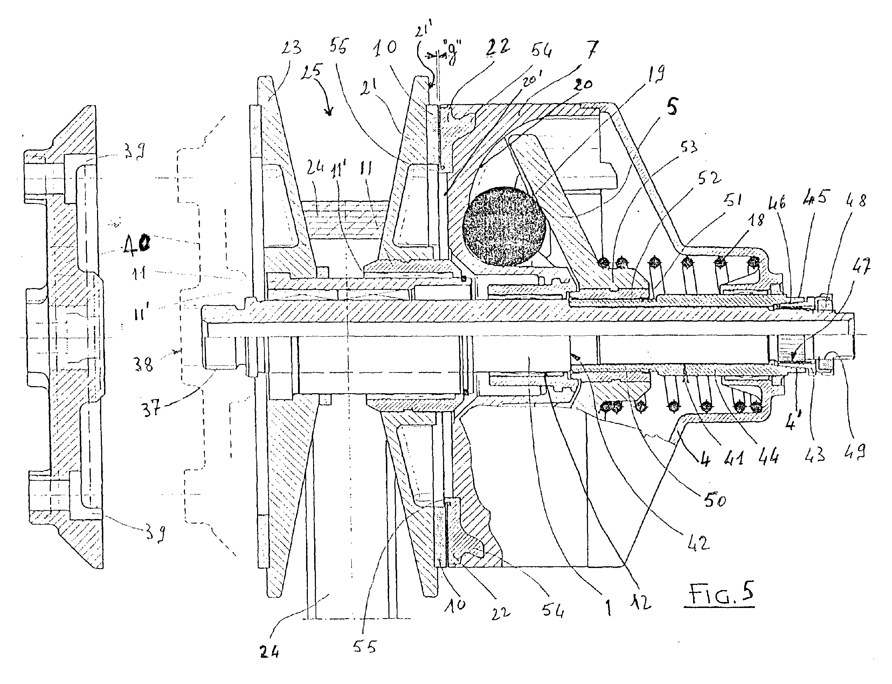

With reference to Figures 1-3, the motor-converter of the present invention comprises a motor-shaft 1, an external chill 7, coaxial and idly mounted by means of sliding and/or translation bearings and/or bushing on said shaft 1, and an external lid 4 fixed to said external chill 7. Lid 4, having preferably a substantially truncated cone shape with the greater base fixed to chill 7 and the smaller base closed, is provided, in the middle of the smaller base, with a housing 4'. An elongated guide 2 is fixed, at one end, to the fixed end of the motor-shaft 1, while at the opposite end, it is supported by a bearing or bushing 3 located in housing 4'.

Chill 7 has a curved internal surface and an opposed flat external surface 20'. A friction clutch plate 22 tied to the flat external surface 20' of chill 20. A friction clutch plate 10 is fixed, in alignment with the friction plate 22, to the external flat surface 21' of a first trapezoid half-pulley 21, also idly coaxially mounted on motor-shaft 1 though bushings 11 associated to brasses or bearings 11'.

Its complementary second trapezoid half-pulley 23, also coaxial with shaft 1 and idle with respect to the latter, is coupled and opposed to the same by means of other bushings 11 and bearings 11'. The two half-pulleys 21, 23 form the trapezoid-race motive pulley 25.

A trapezoid-race driven pulley 26, also constituted of a first 35 and a second half-pulley, trapezoid, coupled and opposite, is placed parallel and aligned with respect to the motive pulley 25.

Both half-pulleys 35, 36 are mounted on a pin 28, parallel to the motor-shaft 1, and a spring 27 keeps the two half-pulleys 35, 36 approached and in touch with one another.

A trapezoid transmission belt 24 is placed in the respective trapezoid races of the motive 25 and driven 26 pulleys.

A bell 5, oriented towards the internal surface 20 of said chill 7, is fixed to shaft 1 through a coaxial serrated joint 7 by means of peripheral radial sliding blocks 8.

A screw 16, screwed at the free end of the motor-shaft 1, keeps the elongated guide 2, together with the dragging bell 5, in engagement and coaxial alignment relation with said shaft 1.

The elongated guide 2, supported at the free end by a pad or bushing 3, located in housing 4', realizes the support of shaft 1, which allows a homogeneous distribution of the loads and the coaxial alignment between shaft 1 and the elongated guide 2 to be orthogonal between said shaft 1 and lid 4.

The association of guide 2 of shaft 1 takes place by means of the interposition of several movable shims 9 that, during the use, are progressively eliminated to recover the increase in clearance 17 ensuing from the progressive reduction due to the wear of the clutch-ring 10.

A counteracting spring 18, coaxial to guide 2 and located on said guide 2 between the dragging bell 5 and the smaller base of lid 4, keeps the dragging bell 5 tensioned and guide-like axially oscillating.

Masses 19, free to move according to radial directions, are located in the room defined by the internal curve surface 20 of chill 7 and the dragging bell 5.

During the working, the rotation speed of shaft 1 is transmitted to the dragging bell 5 and from the latter to chill 7, through the engagement of masses 19 on its internal curved surface 20.

With the motor on and slowly running, the rotation speed is not sufficient to generate a centrifugal force such as to cause the radial sliding towards the outside of masses 19; the latter remain in their resting position, kept standstill by the counteracting spring 18. The half-pulleys 21, 23, being not engaged in any way with the moving chill 7, and being idle with respect to the motor-shaft 1, do not rotate and therefore do not drag the transmission belt 24.

With the acceleration of the motor and the increase in speed of the motor-shaft 1 of the dragging bell 5 and masses 19, the latter are submitted to the action of a corresponding centrifugal force that pushes them radially towards the outside, with a radial climbing motion along the external curved surface 20 of chill 7. Therefore, chill 7 is pushed to slide axially towards the first trapezoid half-pulley 21 of the motive pulley 25. When the friction clutch plate 22 comes in touch and friction relation with the friction clutch-ring 10, the first half-pulley 21 is dragged in the rotary motion. The higher the rotation speed of the motor-shaft 1, the greater the pushing of masses 19 towards the outside, with a greater axial shifting of chill 7 and the first half-pulley 21. The motion is transmitted by friction of the first half-pulley 21 to the transmission belt 24 and from this to the second half-pulley 23. Speed variations cause the variation of the diametric position of the transmission belt 24 along the race of the motive pulley 25, varying the transmission ratio. Each variation causes a complementary modification of the ratio on the driven pulley 26, as the transmission belt 24 modifies also on the same its diametric position, spacing axially the two coaxial complementary half-pulleys 35, 36 that make it up, overcoming the resistance opposed by the counteracting spring 27.

The presence of the elongated guide 2 allows the motor-shaft 1 to be supported at its free end on bearing 3 located in housing 4' of lid 4. Such arrangement ensures the necessary orthogonality of the motor-shaft 1 with the plate-type friction clutch 10. Besides, to ensure such orthogonality, the weights of bell 5 and chill 7 are reduced, as such components are made from light materials with high mechanical characteristics. Such a light material may be a plastic material reinforced with fiberglass, carbon fibers or organic fibers having a high tenacity, such as for instance Kevlar fibers. Such reinforced plastic material has mechanical properties suitable for the particular application and relatively low specific weights. By mere way of example, there may be employed reinforced plastic materials comprising 30-45% fiberglass. In particular, the plastic materials reinforced with 30% fiberglass have a density of 1.6 kg/dmc, a traction modulus of 11000 Mpa, a flexion modulus of 10300 Mpa and an ultimate traction stress of 158 MPa. The plastic materials reinforced with 45% fiberglass have about the same density, a traction modulus of 16000 MPa, a flexion modulus of 100 and an ultimate traction stress of 158 MPa. Besides, the reinforced plastic materials have a plastic material-steel friction coefficient of 0.17.

The elongated guide 2 may be of an independent type, as shown in Figure 1; or said guide 2' may be produced integrally with the dragging bell 4, as shown in Figure 4.

According to a characteristic of the present invention, all sliding and/or translation bearings and/or bushings 3, 11, 12 are protected with annular gaskets 13, 14, 15.

As shown in Figures 2a and 2b, in order to facilitate the operations of extraction for maintenance reasons of the driven pulley 26, pin 28 comprises a central hole 29 wherein a fixed push rod 30 is positioned. Said hole 29 ends with a threading 31, and a bushing 32 is screwed on said threading 31. Bushing 32 is provided with a central threaded hole where, during the extraction for maintenance, a screw 33 engages that has a tough head ball 34. By bringing the ball in touch with the fixed push rod 30 and going on with the screwing action of screw 33, the desired extraction of pulley 26 is obtained.

As shown in Figure 5, each motor-converter is provided with an adjustment interchangeable flange 40 for the connection of the motor-shaft 1 with the various types of motors (not shown). Each adjustment flange 40 comprises a coaxial threaded hole 38 and peripheral attachment points 39 for bolts or the like. The motor-shaft 1 has a threaded terminal 27 which can be screw-coupled with the coaxial threaded hole 38 of flange 40.

In order to prevent shaft 1 from coming out from hole 38 of flange 50 during the working, the threaded coupling is realized by screwing contrary to the rotation direction of the shaft.

With reference to Figure 5, the motor-shaft 1 is produced as an enbloc with the elongated guide 2, and, in correspondence of its end opposite to that coupled to flange 40, is provided with a housing 41, circumscribed by an intermediate beat 42 and a locking ring 43. In said housing 41 a bush 44 is keyed that can be caused to rotate by means of a key applied in special notches 45.

The locking ring 43 comprises a bushing having a conical external surface 46 and a straight serrated internal surface 47.

Said external conical surface engages with a corresponding conical housing obtained at the end of bushing 44 and said internal serrated surface 47 engages with a corresponding serration obtained on the motor-shaft 1.

The free end 49 of the motor-shaft 1 is threaded and a ring nut 48 is screwed on it. When the ring nut 48 is screwed, it pushes coaxially the locking ring 43 against bushing 44, locking it through the restraining of the two conjugated conical parts. When the ring nut 48 is unscrewed, it frees said restraining, allowing the rotation of bushing 44 in housing 41.

End 50 of bushing 44, located near to beat 42, is provided with a male threading 51 which couples with a corresponding female threading of a bushing 52 integral with hub 53 of the dragging bell 5.

When the locking ring is slackened, bushing 44 can rotate in its housing 41, causing the rotation of the male threading 51 and the ensuing dragging in the axial direction of bushing 52 and the dragging bell 5, said bushing 52 being engaged and tied to said bell 5 by means of peripheral axial guides. The axially moving bell 5 presses the masses 19 that lean and push in the same direction against the external chill 7.

The axial sliding, with is made periodically without having to disassemble any part of the motor-converter, but causing simply bushing 44 to rotate by means of a key that engages with notches 45, allows to periodically restore the optimum clearance (g) between the friction clutch-ring 10 of the half-pulley 21 and the friction plate 22 of chill 7. In this manner, the increase in said clearance which arises from the friction wear of the friction clutch-ring 10 during the working is recovered and the optimum working conditions of the motor-converter are restored.

After each clearance restoring, the locking ring 43 is locked and bushing 44 remains fastened in the position.

According to a preferred embodiment, the friction clutch plate 22, preferably made from cast iron, is fixed in a stable manner and without the possibility of coming out at the external chill 7 by means of an annular back element 54, having the shape of a circular inclined serration.

The fastening is obtained by co-molding oft he aluminum chill on the cast iron friction plate. The friction plate is provided, along its internal circumference, with a switch-ring 55 whose function is to prevent the powders due to the friction consumption of the friction plate 22 from falling on the rotating central parts, and to plateharge them towards the outside by centrifugal force.

The dragging bell 5 is an enbloc, without weldings, and is preferably obtained by molding high resistance reinforced plastic materials. During the molding, bell 5 is coupled and tied to bushing 52 coupled to bush 44. Such solution avoids weldings and the problems associated to the coaxiality with the motor-shaft 1 and the alignment precision of the inclined planes, improving their coupling with masses 19.

While the present invention has been described above with reference to some specific embodiments thereof, reported by way of illustrative, non limiting examples, it is obvious that those skilled in the art will be able to introduce various changes and modifications in the light of the above reported description.

## Claims

1. A motor-converter with clutch-plates comprising:
• a motor-shaft (1);
• at least a trapezoid-race-variable-diameter motive pulley (25), formed by two trapezoid, opposite half-pulleys (21, 23), idly-mounted on said motor-shaft (1);
• a chill (7), mounted on said motor-shaft (1) in coaxial alignment with at least one of said half-pulleys (21), and comprising on the parallel side (20) facing said half-pulley (21), a friction clutch plate (22) and, on the opposite side (20'), a curved surface wall;
• a dragging bell (5) integral with the motor-shaft;
• masses (19) caused to move by said bell (5) and radially sliding in the centrifugal direction along the curved surface wall of chill (7); and
• at least a trapezoid race, variable diameter driven pulley (26) formed by two trapezoid opposite half-pulley (35, 36), and connected to said motive pulley (25) through a trapezoid belt (24),
said motor-converter being **characterized in that** chill (7) comprises a lid (40) having a supporting housing (4'); the motor-shaft (1) comprises an elongated guide (2) whose end is inserted in and supported by said housing (4'), and the dragging bell (5) and the complementary chill (7) are made from light materials having high mechanical characteristics.

2. The motor-converter according to claim 1, wherein the light material having high mechanical characteristics is a plastic material reinforced with fiberglass, carbon fibers or high tenacity organic fibers.

3. The motor-converter according to claim 1 or 2, wherein bell (5) is fixed to shaft (1) through a coaxial serrated joint (6) and is associated to chill (7) by means of peripheral radial sliding blocks (8).

4. The motor-converter according to any of the preceding claims, wherein the elongated guide (2) together with the dragging bell (5) are kept in engagement and coaxial alignment relation with said shaft (1) by means of a screw (16) screwed at the free end of the motor-shaft (1).

5. The motor-converter according to any of the preceding claims, wherein several removable shims (9), intended for the progressive recovery of the increase in clearance (17) due to the progressive reduction due to wear of the thickness of the friction clutch-ring (10), are interposed between the elongated guide (2) and the motor-shaft (1).

6. The motor-converter according to any of the preceding claims, wherein an counteracting spring (18) coaxial relatively to the elongated guide (2) and located on said guide (2) between the dragging bell (5) and lid (4), keeps the dragging bell (5) tensioned and guide-like axially oscillating.

7. The motor-converter according to any of the preceding claims, wherein the elongated guide (2') is integral with the dragging bell (5).

8. The motor-converter according to any of the preceding claims, wherein bearings 3 that support the end of the elongated guide (2), the bearings (11') that allow the sliding of the half-pulley (21) on the motor-shaft (1) and those (12) that allow the sliding of chill (7) on said shaft (1), are protected by annular gaskets (13, 14, 15).

9. The motor-converter according to any of the preceding claims, **characterized in that** it also comprises means for the quick extraction of the driven pulley (26) comprising a central hole (29), obtained on pin (28) whereon the two half-pulleys (35, 36) are mounted; a fixed push rod (30) positioned in said hole (29); a threading (31) obtained in said hole (29) and a bushing (32) screwed on said threading (31); said bushing (32) being provided with a central threaded hole wherein, during the extraction, a screw (33) engages that has a tough head ball (34).

10. The motor-converter according to any of the preceding claims, **characterized in that** it comprises an adjustable interchangeable flange (40) for the connection of the motor-shaft (1) to the various motor types, said flange (40) being provided with a coaxial threaded hole (38) and peripheral attachment points (39) for bolts or the like; terminal (37) of the motor-shaft (1) being threaded and coupled by screwing, contrary to the rotation direction of the motor, on said threaded hole (38).

11. The motor-converter according to any of the preceding claims, wherein the motor-shaft (1) forms en enbloc with the elongated guide (2).

12. The motor-converter according to any of the preceding claims 1-4 and 6-11, wherein the motor-shaft (1) in correspondence of its end opposite to that coupled to flange (40) is provided with a housing (41) circumscribed by an intermediate beat (42) and a locking ring (43); a bush (44) that can be caused to rotate by means of a key applied in special notches (45) is keyed in said housing (41), and a ring nut (48), screwed on the free end (49) of the motor-shaft (1), acts on said locking ring (43), locking or unlocking the rotation of bushing (44).

13. The motor-converter according to claim 12, wherein the locking ring (43) comprises a bushing having a conical external surface (46) and a straight serrated internal surface (47); said external conical surface (46) being engaged with a corresponding conical housing obtained at the end of bushing (44) and said internal serrated surface (47) engages with a corresponding serration obtained on the motor-shaft (1).

14. The motor-converter according to claim 12 or 13, wherein end (50) of bushing (44), located close to beat (42), is provided with a male threading (51) which couples with a corresponding female threading of a bush (52) integral with hub (53) of the dragging bell (5).

15. The motor-converter according to claim 12 or 13, wherein the friction clutch plate (22) is made from cast iron and fastened to the external chill (7) by means of an annular back element (54) having the shape of a serration, preferably circular or inclined.

16. The motor-converter according to any of the preceding claims, wherein the friction clutch plate (22) is provided, along its internal circumference, with a switch-ring (55) that switches the powders due to its wear.

17. The motor-converter according to any of the preceding claims, wherein the spherical masses (19) are constituted of metal inserts enclosed in envelopes from reinforced plastic material.
